# EUROPÄISCHE PATENTSCHRIFT

(11) **EP 2 604 792 B1**
(45) Veröffentlichungstag und Bekanntmachung des Hinweises auf die Patenterteilung: **04.11.2015**
(21) Anmeldenummer: 11193682.9
(22) Anmeldetag: 15.12.2011
(51) Int. Cl.: B05D 5/00, B23P 6/00, F01D 21/04, F01D 5/02, F01D 5/00

(54) **Verfahren zur Reparatur eines Bauteils einer Turbomaschine und ein gemäß diesem Verfahren repariertes Bauteil**
Method for repairing a component of a gas turbine engine and associated repaired component
Procédé de réparation d'un composant d'une turbomachine et composant réparé associé

(43) Veröffentlichungstag der Anmeldung: 19.06.2013
(73) Patentinhaber: MTU Aero Engines AG, 80995 München (DE)
(72) Erfinder: Heinzelmaier, Christian, 82178 Puchheim (DE); Raiche, Michael, 80997 München (DE)

(56) Entgegenhaltungen:
- EP-A2- 1 188 900
- EP-A2- 2 119 870

## Beschreibung

Die Erfindung betrifft ein Verfahren zur Reparatur eines Bauteils einer Turbomaschine, insbesondere eines Rotors einer Fluggasturbine, gemäß dem Oberbegriff des Patentanspruchs 1.

Gemäß herkömmlichen Verfahren zur Reparatur eines Bauteils einer Turbomaschine, beispielsweise eines Verdichterrotors einer Fluggasturbine, mit in Nuten aufgenommenen Schaufeln und mit einem Stützbereich zur Begrenzung eines Schaufelkippwinkels, werden verschleißbehaftete Abschnitte des Stützbereiches des Bauteils bei der Reparatur entfernt. Beispielsweise kann die Reparatur eines Verdichterrotors mittels eines in radialer Richtung zurückgesetzten Rotorbereiches, einer sogenannten Ausblendung oder Ausrundung, erfolgen.

In der EP 1 188 900 A2 wird ein Verfahren zur Ausrichtung einer Blisk offenbart, wobei Wuchtstege an der Blisk angebracht werden, anschliessend Unwuchtungen detektiert und entsprechend durch maschinelles Bearbeiten der Wuchtstege ausgeglichen werden können.

Nachteilig bei diesen Reparaturverfahren und derartig reparierten Bauteilen ist, dass der Schaufelkippwinkel der Schaufeln in axialer Richtung nach einer Reparatur des Rotors aufgrund des entfernten Stützabschnittes derart zunehmen kann, dass der sich bei Triebwerkstillstand einstellende Schaufelkippwinkel die fliehkraftbedingte radiale Schaufelausrichtung im Betrieb des Triebwerks einschränkt oder verhindert. Dies ist eine häufige Ursache von Schaufelfußbeschädigungen und -brüchen im Triebwerksbetrieb. Weiterhin nachteilig ist, dass es aufgrund der im reparierten Rotorbereich entfernten Bauteilabschnitte und der dadurch reduzierten Masse zu einer Rotorunwucht kommen kann.

Demgegenüber liegt der Erfindung die Aufgabe zugrunde, ein Verfahren zur Reparatur eines Bauteils und ein repariertes Bauteil zu schaffen, bei denen die resultierende Bauteilfestigkeit höchsten Anforderungen an die Betriebssicherheit genügt und die Bauteillebensdauer vor der Reparatur nicht beeinträchtigt wird.

Diese Aufgabe wird mittels eines Reparaturverfahrens mit den Merkmalen des Patentanspruchs 1 gelöst.

Gemäß dem erfindungsgemäßen Verfahren zur Reparatur eines Bauteils einer Turbomaschine, beispielsweise eines Rotors einer Fluggasturbine, mit in zumindest einer Nut aufgenommenen Schaufeln und mit mindestens einem Stützbereich für die Schaufeln zur Begrenzung eines Schaufelkippwinkels, wird zumindest ein verschleißbehafteter Abschnitt des Stützbereiches des Bauteils entfernt und an dem Bauteil eine in Anlage an zumindest eine Stützfläche mindestens einer Schaufel bringbare Beschichtung zur Begrenzung des Schaufelkippwinkels ausgebildet. Erfindungsgemäß erfolgt ein Aufbringen einer Beschichtung im Reparaturbereich zur definierten Einschränkung des Schaufelkippens. Bei einer Reparatur eines Bauteils, wie insbesondere eines Verdichterrotors einer Fluggasturbine, mittels eines in radialer Richtung zurückgesetzten Rotorbereiches kann es dadurch nicht mehr zu Beschädigungen aufgrund eines zu großen Schaufelkippwinkels kommen. Weiterhin wird eine Unwucht aufgrund der im reparierten Rotorbereich entfernten Bauteilabschnitte und der damit reduzierten Masse mittels der Beschichtung, d.h. einer Masseaddition, verhindert oder zumindest stark reduziert.

Der Schaufelkippwinkel ist bei einer Ausführungsform des Verfahrens mittels der Schichtdicke der Beschichtung definiert einstellbar. Vorzugsweise wird der Kippwinkel nach der Reparatur mittels der Beschichtung auf einen Bereich beschränkt, der dem Kippwinkel vor der Reparatur zumindest im Wesentlichen entspricht.

Erfindungsgemäß wird zumindest ein verschleißbehafteter Abschnitt eines Rotors in einem Bereich unterhalb einer Schaufelplattform der Schaufel entfernt.

Die Beschichtung wird vorzugsweise auf zumindest einen der Schaufelplattform zugewandten Radialvorsprung des Bauteils aufgebracht und bildet eine Auflagefläche aus, die mit der Stützfläche der Schaufelplattform zur Begrenzung des Schaufelkippwinkels in Anlage bringbar ist. Die Beschichtung kann hierbei als lokale Maßkorrekturschicht zur Begrenzung des Schaufelkippens ausgebildet werden.

Der Rotor ist bei einer konkreten Ausführungsform als Verdichterrotor und die Schaufeln als Verdichterschaufeln ausgebildet. Der Verdichterrotor weist hierbei unterhalb der Schaufelplattform der Verdichterschaufeln zumindest eine Ringnut zur Aufnahme eines Ringelementes, wie beispielsweise eines Dämpfungsringes zur Dämpfung eines Schaufelkippens und/oder eines Halterings zur Axialsicherung der Schaufeln auf, wobei zumindest ein verschleißbehafteter Abschnitt einer Seitenwandung der Ringnut entfernt wird. Beispielsweise kann die hintere, turbinenseitige Seitenwandung einen beschädigten Bereich aufweisen der entfernt wird. Die mindestens eine Schaufel im Bereich des entfernten Abschnittes würde nach dem Entfernen des verschleißbehafteter Stützabschnittes der ersten Seitenwandung einen unzulässig großen Kippwinkel aufweisen. Daher wird die Beschichtung auf eine der ersten Seitenwandung gegenüberliegend angeordnete zweite Seitenwandung der Ringnut aufgebracht. Die zweite Seitenwandung kann die vordere, einlaufseitige Seitenwandung der Ringnut sein. Die Beschichtungsdicke wird entsprechend dem gewünschten Kippwinkel der Schaufel ausgebildet. Im Rahmen dieses Ausführungsbeispiels wird unter Kippwinkel ein Schwenkwinkel der Schaufel in axialer Richtung verstanden. Dadurch kann es nach einer Reparatur des Verdichterrotors, beispielsweise einer Fluggasturbine, nicht mehr zu Beschädigungen der Verdichterschaufeln kommen. Die Betriebssicherheit ist dadurch erheblich verbessert und die Bauteillebensdauer wird durch die Reparatur nicht beeinträchtigt.

Als besonders vorteilhaft hat es sich erwiesen, wenn die Beschichtung auf einer Außenumfangsfläche der zweiten Seitenwandung aufgebracht wird. Die Beschichtung bildet hierbei die das Schaufelkippen begrenzende Auflagefläche für die Schaufelplattform aus. Dadurch kann bereits mit einem dünnen Schichtaufbau eine gute Abstützung und definierte Begrenzung des Kippwinkels erreicht werden.

Vorzugsweise wird die Beschichtung auf einen Bereich aufgebracht, dessen Länge sich entlang des Umfangs über eine Länge erstreckt, die zumindest der Länge des entfernten Abschnittes entspricht. Die zumindest eine Schaufel im Bereich der Reparaturstelle ist dadurch entlang ihrer gesamten Umfangsbreite gestützt. Dadurch werden Verschleiß und Beschädigungen der Kontaktpartner reduziert bzw. vermieden.

Bei einem besonders bevorzugten Ausführungsbeispiel der Erfindung erfolgt die Beschichtung mittels eines Spritzverfahrens, insbesondere mittels eines thermischen Spritzverfahrens, wie vorzugsweise kinetischem Kaltgasspritzen oder Plasmaspritzen.

Bei der Entfernung des verschlissenen Abschnittes wird vorzugsweise eine Ausklinkung oder Ausrundung ausgebildet, die hinsichtlich der resultierenden Bauteilfestigkeit höchsten Anforderungen genügt.

Ein erfindungsgemäßes Bauteil einer Turbomaschine, insbesondere ein Rotor einer Fluggasturbine, weist zumindest eine gemäß dem beanspruchten Verfahren reparierte Stelle auf. Bei einer Lösung mit Ringelementen, wie beispielsweise Dämpfungsringen, ist vorzugsweise zumindest ein Ringelement axial vor einer Schaufelreihe und mindestens ein Ringelement axial hinter einer Schaufelreihe der Verdichterbeschaufelung angeordnet.

Sonstige vorteilhafte Weiterbildungen der Erfindung sind Bestandteil der weiteren Unteransprüche.

Im Folgenden wird ein bevorzugtes Ausführungsbeispiel der Erfindung anhand schematischer Zeichnungen näher erläutert. Es zeigen:
Figur 1 eine Schnittdarstellung einer Fluggasturbine im Bereich des Hochdruckverdichters;
Figur 2 eine vergrößerte Detaildarstellung des Ausschnitts X aus Figur 1;
Figur 3 eine vergrößerte Detaildarstellung des Ausschnitts D aus Figur 2;
Figur 4 eine Detaildarstellung des Verdichterrotors in Richtung der Ansicht J aus Figur 2;
Figur 5 eine Schnittdarstellung des Verdichterrotors entlang der Linie G-G aus Figur 2;
Figur 6 eine Schnittdarstellung des Verdichterrotors entlang der Linie F-F aus Figur 4;
Figur 7 eine Draufsicht H aus Figur 6;
Figur 8 eine Schnittdarstellung des Verdichterrotors entlang der Linie F-F aus Figur 4 nach der Reparatur und
Figur 9 eine Draufsicht H aus Figur 6 nach der Reparatur.

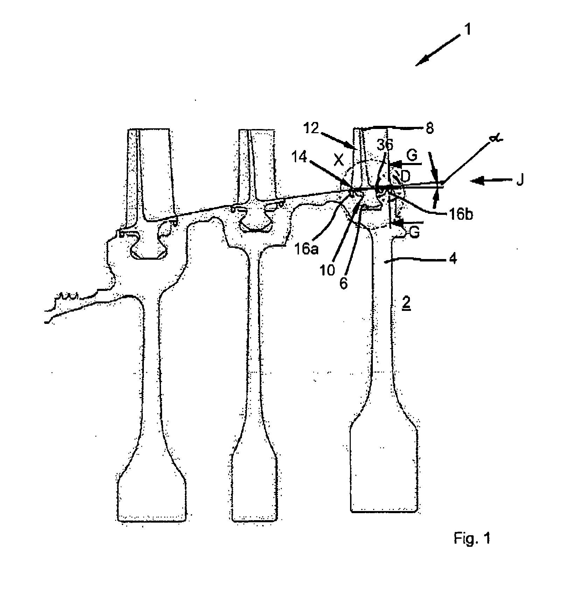

Figur 1 zeigt beispielhaft die Anwendung des erfindungsgemäßen Reparaturverfahrens im Bereich eines Hochdruckverdichters 1 einer Fluggasturbine 2. Die Erfindung ist jedoch nicht auf Reparaturanwendungen in diesem Bereich beschränkt, vielmehr kann das Verfahren auch in anderen Bereichen vorteilhaft eingesetzt werden.

Der Hochdruckverdichter 1 weist einen Verdichterrotor 4 mit in Rotornuten 6 aufgenommenen Verdichterschaufeln 8 auf. Dies wird exemplarisch anhand der in Figur 1 dritten Verdichterstufe von drei in axialer Bauart aufeinander folgenden Verdichterstufen des Hochdruckverdichters 1 erläutert.

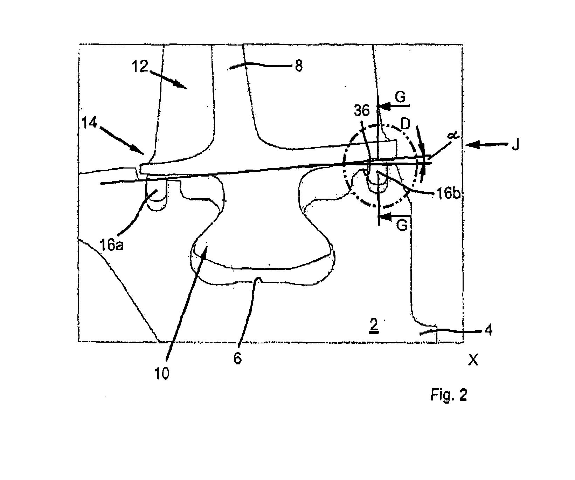

Die Verdichterschaufeln 8 weisen jeweils einen formschlüssig in der Rotornut 6 aufgenommenen Schaufelfuß 10, ein Schaufelblatt 12 und eine im Übergangsbereich zwischen Schaufelfuß 10 und einem Schaufelblatt 12 angeordnete Schaufelplattform 14 auf. Zwischen dem Verdichterrotor 4 und den Schaufelplattformen 14 sind als Dämpfungsringe ausgebildete Ringelemente 16 angeordnet, wobei jeder Verdichterstufe ein Dämpfungsring 16a axial vor einer Schaufelreihe der Verdichterschaufeln und ein Dämpfungsring 16b axial hinter der Schaufelreihe der Verdichterbeschaufelung zugeordnet ist. Dies ist ferner Figur 2 zu entnehmen, die eine vergrößerte Detaildarstellung des Ausschnitts X aus Figur 1 zeigt.

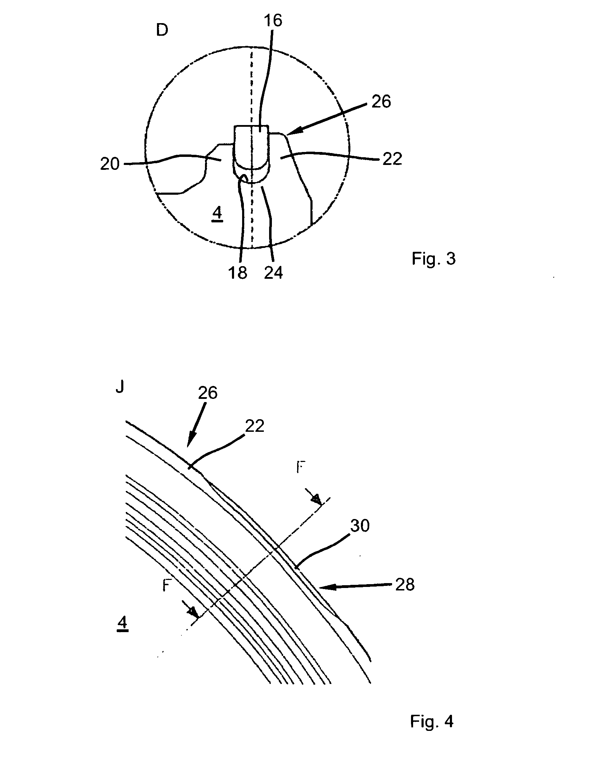

Wie insbesondere Figur 3 zu entnehmen ist, die eine vergrößerte Detaildarstellung des Ausschnitts D aus Figur 2 zeigt, sind die Dämpfungsringe 16 jeweils in einer etwa U-förmigen, radial nach außen offenen Ringnut 18 des Verdichterrotors 4 angeordnet. Die Dämpfungsringe 16 weisen einen kreisförmigen Dämpfungsringgrundkörper mit einem etwa rechteckigen Querschnitt und abgerundeten Eckbereichen sowie zwei benachbart angeordnete, nicht dargestellte Ringenden auf. Die Ringnut 18 wird von zwei sich parallel erstreckenden Seitenwandungen 20, 22 und einer Bodenwandung 24 begrenzt. Eine einlaufseitig vordere Seitenwandung 20 ist gegenüber einer hinteren, turbinenseitigen Seitenwandung 22 radial zurückgesetzt, so dass die hintere Seitenwandung 22 radial vorspringt und einen Stützbereich 26 für die Schaufelplattformen 14 der Verdichterschaufeln 8 ausbildet (siehe Figur 1).

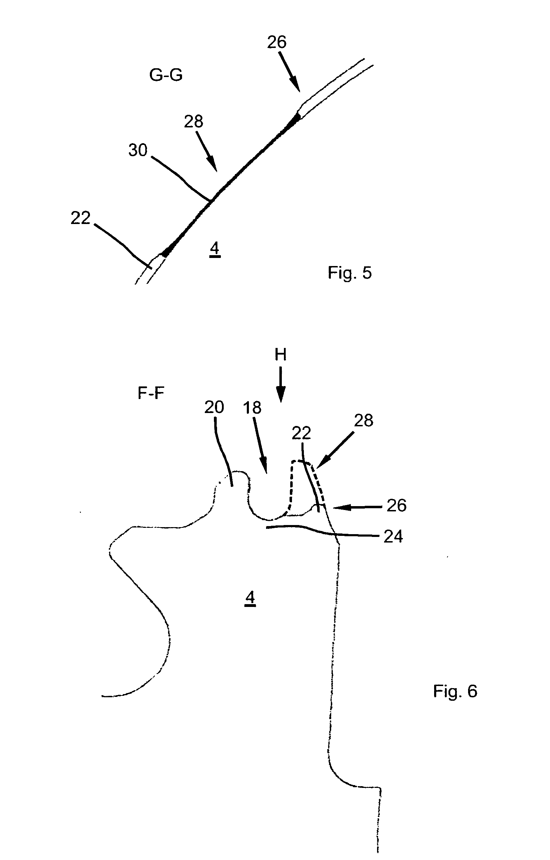

Die Reparatur erfolgt bei dem dargestellten Ausführungsbeispiel in einem beschädigten Bereich der hinteren, turbinenseitigen Seitenwandung 22. Wie insbesondere den Figuren 4 und 5 zu entnehmen ist, die eine Detaildarstellung des Verdichterrotors 4 in Richtung der Ansicht J aus Figur 2 und eine Schnittdarstellung des Verdichterrotors 4 entlang der Linie G-G aus Figur 2 zeigen, wird hierzu ein verschleißbehafteter Abschnitt 28 der hinteren Seitenwandung 22, d.h. des Stützbereiches 26 des Verdichterrotors 4 in einem ersten Verfahrensschritt entfernt. Bei der Entfernung des verschlissenen Abschnittes 28 wird eine Ausblendung bzw. Ausklinkung oder Ausrundung 30 ausgebildet, die hinsichtlich der resultierenden Bauteilfestigkeit höchsten Anforderungen genügt.

Wie Figur 6 zu entnehmen ist, die eine Schnittdarstellung des Verdichterrotors 4 entlang der Linie F-F aus Figur 4 zeigt, wird die hintere Seitenwandung 22 - die ursprüngliche Kontur der Seitenwandung 22 ist mittels einer gestrichelten Linie angedeutet - bei der Reparatur bis auf einen relativ kleinen Vorsprung mittels einer mechanischen, spanenden oder spanlosen Bearbeitung entfernt. Die Kanten werden mittels Kugelstrahlen gerundet.

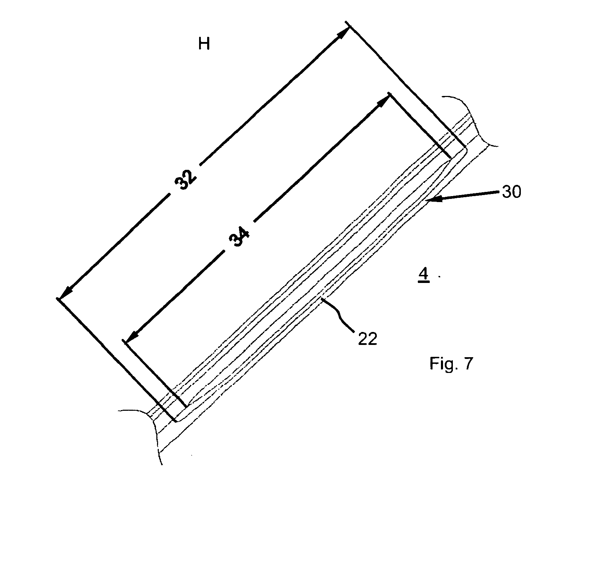

Aus Figur 7, die eine Draufsicht H aus Figur 6 zeigt, ist ersichtlich, dass eine Umfangsausblendung 32 größer als eine axiale Ausblendung 34 ist. Die Ausblendung 30 hat insgesamt einen etwa linsenförmigen Querschnitt. Die Verdichterschaufel 8 im Bereich der Ausblendung 30 würde nach dem Entfernen des verschleißbehafteten Abschnittes der hinteren Seitenwandung 22 einen unzulässig großen Schaufelkippwinkel α aufweisen (siehe Figur 2).

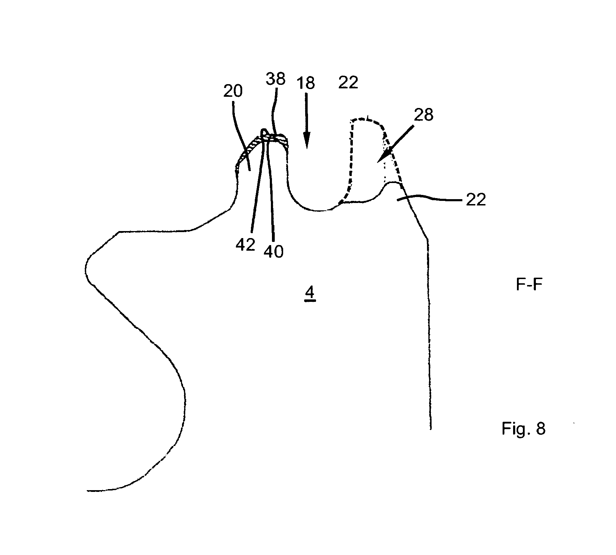

Wie Figur 8 zu entnehmen ist, die eine Schnittdarstellung des Verdichterrotors 4 entlang der Linie F-F aus Figur 4 nach der Reparatur zeigt, wird eine in Anlage an eine Stützfläche 36 der Schaufelplattform 14 (siehe Figur 2) bringbare Beschichtung 38 zur Begrenzung des Schaufelkippwinkels α ausgebildet. Die Beschichtung 38 wird mittels eines Plasmaspritzverfahrens auf eine Außenumfangsfläche 40 der vorderen Seitenwandung 20 der Ringnut 18 aufgebracht und bildet eine das Schaufelkippen begrenzende Auflagefläche 42 aus, die mit der Stützfläche 36 der Schaufelplattform 14 zur Begrenzung des Kippwinkels der Schaufel 8 in Anlage bringbar ist. Die Beschichtung 38 ist hierbei als lokale Maßkorrekturschicht zur Begrenzung des Schaufelkippens ausgebildet. Dadurch wird bereits mit einem dünnen Schichtaufbau eine gute Abstützung und definierte Begrenzung des Kippwinkels α erreicht. Die Beschichtungsdicke wird entsprechend dem zulässigen Kippwinkel α der Schaufel 8 ausgebildet. Dadurch kann es nach einer Reparatur des Verdichterrotors 4 nicht mehr zu kippwinkelverursachten Beschädigungen der Verdichterschaufeln 8 kommen. Weiterhin wird eine Unwucht aufgrund der im reparierten Rotorbereich entfernten Bauteilabschnitte und der damit reduzierten Masse mittels der Beschichtung, d.h. einer Masseaddition, verhindert oder zumindest stark reduziert. Die Betriebssicherheit ist erheblich verbessert und eine höhere Bauteillebensdauer wird erreicht.

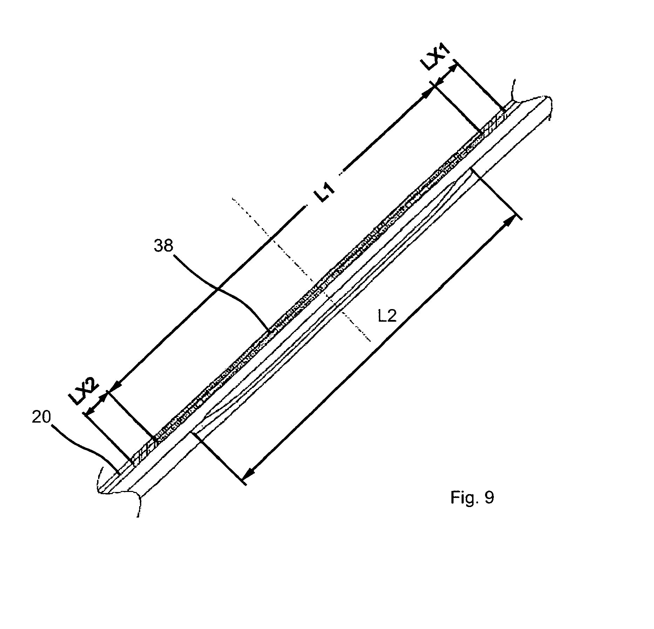

Wie in Figur 9 dargestellt ist, die eine Draufsicht H aus Figur 6 nach der Reparatur zeigt, wird die Beschichtung 38 auf einen Bereich der Seitenwandung 20 aufgebracht, der sich entlang des Umfangs über eine Länge L1 erstreckt, die zumindest der Länge L2 des entfernten Abschnittes entspricht. Bevorzugt wird es, wenn die Beschichtung 38 eine gegenüber der Ausklinkung größere Länge L1 aufweist. Die Beschichtung kann hierbei beidseitig einen Beschichtungsauslauf LX1, LX2 aufweisen. Die Verdichterschaufel 8 ist dadurch im Bereich der Reparaturstelle entlang ihrer gesamten Umfangsbreite abstützbar, so dass der Schaufelkippwinkel α definiert begrenzt ist.

Offenbart ist ein Verfahren zur Reparatur eines Bauteils 4 einer Turbomaschine, insbesondere eines Rotors einer Fluggasturbine 1, mit in zumindest einer Nut 6 aufgenommenen Schaufeln 8 und mit mindestens einem Stützbereich 26 zur Begrenzung eines Schaufelkippwinkels α, wobei zumindest ein verschleißbehafteter Abschnittes 28 des Stützbereiches 26 des Bauteils entfernt und eine in Anlage an zumindest eine Stützfläche mindestens einer Schaufel bringbare Beschichtung an dem Bauteil 4 zur Begrenzung des Schaufelkippwinkels α ausgebildet wird. Weiterhin offenbart ist ein Bauteil 4 einer Turbomaschine, insbesondere ein Rotor einer Fluggasturbine 1, mit zumindest einer derartigen Reparaturstelle.

### Bezugszeichenliste

- 1: Hochdruckverdichter
- 2: Fluggasturbine
- 4: Verdichterrotor
- 6: Rotornut
- 8: Verdichterschaufel
- 10: Schaufelfuß
- 12: Schaufelblatt
- 14: Schaufelplattform
- 16: Ringelement
- 18: Ringnut
- 20: Seitenwandung
- 22: Seitenwandung
- 24: Bodenwandung
- 26: Stützbereich
- 28: Abschnitt
- 30: Ausblendung
- 32: Umfangsausblendung
- 34: axiale Ausblendung
- 36: Stützfläche
- 38: Beschichtung
- 40: Außenumfangsfläche
- 42: Auflagefläche

## Patentansprüche

1. Verfahren zur Reparatur eines Bauteils (4) einer Turbomaschine (2) mit in zumindest einer Rotornut (6) aufgenommenen Schaufeln (8) und mit mindestens einem Stützbereich (26) für die Schaufeln (8) zur Begrenzung eines Schaufelkippwinkels α und einer Ringnut (18) zur Aufnahme eines Ringelements (16), mit den Schritten:
a) Entfernen zumindest eines, optional unterhalb einer Schaufelplattform (14) der Schaufel (8) angeordneten, verschleißbehafteten Abschnittes (28) des Stützbereiches (26) aus einer Seitenwandung (22) der Ringnut (18) und
b) Ausbilden einer in Anlage an zumindest eine Stützfläche (36) mindestens einer Schaufel (8) bringbaren Beschichtung (38) zur Begrenzung des Schaufelkippwinkels α.

2. Verfahren nach Anspruch 1, wobei die Beschichtung (38) auf zumindest einen der Schaufelplattform (14) zugewandten Bereich des Bauteils (4) aufgebracht wird und eine Auflagefläche (42) ausbildet, die mit der Stützfläche (36) der Schaufelplattform (14) zur Begrenzung des Schaufelkippwinkels α in Anlage bringbar ist.

3. Verfahren nach Anspruch 1 oder 2, wobei das Bauteil (4) einer Turbomaschine (2) der Rotor einer Fluggasturbine ist, umfassend mindestens einen als Verdichterrotor (4) ausgebildeten Rotor und als Verdichterschaufeln (8) ausgebildete Schaufeln, wobei zumindest eine Ringnut (18) einen Dämpfungs- und/oder Haltering als Ringelement (16) zur Aufnahme aufweist.

4. Verfahren nach einem der vorhergehenden Ansprüche, wobei die Beschichtung (38) auf einer der Seitenwandung (22) gegenüberliegend angeordneten zweiten Seitenwandung (20) der Ringnut (18) aufgebracht wird.

5. Verfahren nach Anspruch 4, wobei die Beschichtung (38) auf einer Außenumfangsfläche (40) der Seitenwandung, vorzugsweise der zweiten Seitenwandung (20), aufgebracht wird.

6. Verfahren nach einem der vorhergehenden Ansprüche, wobei die Beschichtung (38) auf einen Bereich aufgebracht wird, der sich vorzugsweise entlang des Bauteilumfangs über eine Länge L1 erstreckt, die zumindest der Länge L2 des entfernten Abschnittes (28) entspricht.

7. Verfahren nach einem der vorhergehenden Ansprüche, wobei die Beschichtung (38) mittels eines Spritzverfahrens, vorzugsweise mittels eines thermischen Spritzverfahrens, insbesondere kinetischem Kaltgasspritzen oder Plasmaspritzen aufgebracht wird.

8. Verfahren nach einem der vorhergehenden Ansprüche, wobei mittels des Entfernens des Abschnittes (28) eine Ausklinkung (30) und/oder Ausrundung ausgebildet wird.

## Claims

1. Method for the repair of a component (4) of a turbomachine (2) having blades (8) which are received in at least one rotor groove (6) and having at least one support region (26) for the blades (8) to limit a blade tilt angle α and an annular groove (18) to receive a ring element (16), with the steps:
a) removal of at least one section (28) of the support region (26), which is optionally arranged beneath a blade platform (14) of the blade (8) and is susceptible to wear, from a side wall (22) of the annular groove (18) and
b) formation of a coating (38) which can be brought into contact with at least one support surface (36) of at least one blade (8) to limit the tilt angle α.

2. Method according to claim 1, wherein the coating (38) is applied on at least one region of the component (4) facing the blade platform (14) and forms a support surface (42) which can be brought into contact with the support surface (36) of the blade platform (14) to limit the blade tilt angle α.

3. Method according to claim 1 or 2, wherein the component (4) of a turbomachine (2) is the rotor of an aircraft turbine engine, comprising at least one rotor formed as a compressor rotor (4) and blades formed as compressor blades (8), wherein at least one annular groove (18) has a damping and/or retaining ring as the ring element (16) for receiving.

4. Method according to one of the preceding claims, wherein the coating (38) is applied to a second side wall (20) of the annular groove (18) which is arranged opposite the side wall (22).

5. Method according to claim 4, wherein the coating (38) is applied to a peripheral outer surface (40) of the side wall, preferably of the second side wall (20).

6. Method according to one of the preceding claims, wherein the coating (38) is applied to a region which preferably extends along the periphery of the component over a length L1 which corresponds to at least the length L2 of the removed section (28).

7. Method according to one of the preceding claims, wherein the coating (38) is applied by means of a spraying method, preferably by means of a thermal spraying method, in particular kinetic cold gas spraying or plasma spraying.

8. Method according to one of the preceding claims, wherein a notch (30) and/or rounding is formed by removing the section (28).

## Revendications

1. Procédé de réparation d'un élément (4) d'une turbomachine (2) comprenant des aubes (8) reçues dans au moins une rainure de rotor (6) et comprenant au moins une zone d'appui (26) pour les aubes (8) destinée à limiter un angle de basculement α de l'aube et une rainure annulaire (18) dessinée à recevoir un élément annulaire (16), comprenant les étapes consistant :
a) à retirer au moins une partie (28) de la zone d'appui (26) d'une paroi latérale (22) de la rainure annulaire (18), ladite partie étant soumise à l'usure et étant disposée éventuellement au-dessous d'une plateforme (14) de l'aube (8), et
b) à former un revêtement (38) pouvant être amené en appui sur au moins une surface d'appui (36) d'au moins une aube (8) pour limiter l'angle de basculement α de l'aube.

2. Procédé selon la revendication 1, le revêtement (38) étant appliqué sur au moins une zone de l'élément (4) tournée vers la plateforme (14) de l'aube, et formant une surface de support (42) qui peut être amenée en contact avec la surface d'appui (36) de la plateforme (14) de l'aube pour limiter l'angle de basculement α de l'aube.

3. Procédé selon la revendication 1 ou 2, l'élément (4) d'une turbomachine (2) étant le rotor d'une turbine à gaz d'aéronef, comprenant au moins un rotor réalisé sous la forme d'un rotor de compresseur (4) et des aubes réalisées sous la forme d'aubes de compresseur (8), au moins une rainure annulaire (18) comprenant une bague d'amortissement et/ou de retenue faisant office d'élément annulaire (16) à recevoir.

4. Procédé selon l'une quelconque des revendications précédentes, le revêtement (38) étant appliqué sur une deuxième paroi latérale (20) de la rainure annulaire (18), ladite deuxième paroi annulaire étant disposée à l'opposé de la paroi latérale (22).

5. Procédé selon la revendication 4, le revêtement (38) étant appliqué sur une surface périphérique extérieure (40) de la paroi latérale, de préférence de la deuxième paroi latérale (20).

6. Procédé selon l'une quelconque des revendications précédentes, le revêtement (38) étant appliqué sur une zone qui s'étend de préférence le long de la périphérie de l'élément sur toute une longueur L1, qui correspond au moins à la longueur L2 de la partie (28) retirée.

7. Procédé selon l'une quelconque des revendications précédentes, le revêtement (38) étant appliqué au moyen d'un procédé de pulvérisation, de préférence au moyen d'un procédé de pulvérisation thermique, en particulier d'une pulvérisation cinétique d'un gaz froid ou d'une pulvérisation au plasma.

8. Procédé selon l'une quelconque des revendications précédentes, une encoche (30) et/ou une partie arrondie étant formées à la suite du retrait de la partie (28).
